(19) Europäisches Patentamt
European Patent Office
Office européen des brevets

(11) EP 4 722 861 A1

(12) EUROPEAN PATENT APPLICATION

(43) Date of publication:
08.04.2026 Bulletin 2026/15

(51) International Patent Classification (IPC):
G06F 3/01 (2006.01)        G06T 13/40 (2011.01)
G06T 15/06 (2011.01)       G06T 19/20 (2011.01)

(21) Application number: 24306615.6

(52) Cooperative Patent Classification (CPC):
G06F 3/013; G06T 13/40; G06T 15/04; G06T 17/00;
G06T 19/20; G06T 2219/2021

(22) Date of filing: 02.10.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• AVRIL, Quentin
  35830 BETTON (FR)
• KERBIRIOU, Glenn
  35700 RENNES (FR)
• MARCHAL, Maud
  35510 CESSON-SEVIGNE (FR)

(74) Representative: Vossius & Partner
Patentanwälte Rechtsanwälte mbB
Siebertstraße 3
81675 München (DE)

(54) **SEMANTIC MULTILINEAR GEOMETRICAL EYE MODEL**

(57) Some embodiments of a method may include: obtaining a three-dimensional (3D) model of an eye region of a user, wherein the 3D model is embedded with semantic features corresponding to at least one of gaze, eyelid aperture, and identity of the user; obtaining a first controller setting, wherein the first controller setting corresponds to one of gaze, eyelid aperture, and identity of the user; morphing the 3D model of the eye region using the first controller setting; and displaying the morphed 3D model of the eye region.

FIG. 6C

EP 4 722 861 A1

**Description**

**BACKGROUND**

The present application is related to eye modeling in computer graphics.

**SUMMARY**

An example method in accordance with some embodiments may include: obtaining a three-dimensional (3D) model of an eye region of a user, wherein the 3D model is embedded with semantic features corresponding to at least one of gaze, eyelid aperture, and identity of the user; obtaining a first controller setting, wherein the first controller setting corresponds to one of gaze, eyelid aperture, and identity of the user; morphing the 3D model of the eye region using the first controller setting; and displaying the morphed 3D model of the eye region.

Some embodiments of the example method may further include: obtaining a second controller setting, wherein the second controller setting corresponds to one of gaze, eyelid aperture, and identity of the user, and wherein the first controller setting is different than the second controller setting; re-morphing the 3D model of the eye region using the second controller setting; and displaying the re-morphed 3D model of the eye region.

For some embodiments of the example method, the first controller setting corresponds to a first expression code, and the second controller setting corresponds to a second expression code.

Some embodiments of the example method may further include passing the first and second controller settings through a validity check process to ensure that the first expression code is compatible with the second expression code.

Some embodiments of the example method may further include: mapping the first expression code to a first plausible expression code; and mapping the second expression code to a second plausible expression code, wherein mapping the first and second expression codes respectively to first and second plausible expression codes is performed such that the first plausible expression code is compatible with the second plausible expression code.

For some embodiments of the example method, the 3D model of the eye region uses a combination of identity codes and expression codes.

For some embodiments of the example method, morphing the 3D model of the eye region comprises manipulating the 3D model using an identity code associated with the first controller setting.

For some embodiments of the example method, morphing the 3D model of the eye region comprises manipulating the 3D model using an expression code associated with the first controller setting.

For some embodiments of the example method, the expression code is associated with an aperture parameter, a vertical level parameter, or a horizontal level parameter of the eye region.

For some embodiments of the example method, the 3D model of the eye region is associated with an avatar.

For some embodiments of the example method, morphing the 3D model of the eye region comprises adjusting in a horizontal direction a gaze of an eye associated with the 3D model based on the first controller setting.

For some embodiments of the example method, morphing the 3D model of the eye region comprises adjusting in a vertical direction a gaze of an eye associated with the 3D model based on the first controller setting.

For some embodiments of the example method, morphing the 3D model of the eye region comprises adjusting an aperture size of an eye associated with the 3D model based on the first controller setting.

For some embodiments of the example method, morphing the 3D model of the eye region comprises adjusting a skin color of skin around an eye associated with the 3D model based on the first controller setting.

An example apparatus in accordance with some embodiments may include: a processor; and a memory storing instructions operative, when executed by the processor, to cause the apparatus to perform any one of the methods listed above.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1A is a system diagram illustrating an example set of interfaces for a system according to some embodiments.

FIG. 1B is a system diagram illustrating an example set of interfaces for a scene description (stored as an item in gITF.json), three video tracks, an audio track, and a JSON patch update track in an ISOBMFF file according to some embodiments.

FIG. 1C is a system diagram illustrating an example set of interfaces for an MPEG-I node hierarchy supporting elements of scene interactivity according to some embodiments.

FIG. 1D is a schematic plan view illustrating example relationships of extended reality scene description objects according to some embodiments.

FIG. 2 is a series of schematic illustrations showing example morphologies with an eye region model according to some embodiments.

FIGs. 3A-3H are schematic illustrations showing examples of identity interpolation according to some embodiments.

FIGs. 4A-4C are schematic illustrations showing examples of horizontal gaze angle changes according to some embodiments.

FIGs. 5A-5B are schematic illustrations showing examples of vertical gaze angle changes according to some embodiments.

FIGs. 6A-6C are schematic illustrations showing examples of eyelid aperture changes according to some embodiments.

FIG. 7 is a flowchart illustrating an example process for using a 3D eye region model according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

**DETAILED DESCRIPTION**

In describing the various embodiments of the present disclosure, certain terminology is used herein for convenience only and should not be considered as limiting such embodiments. In the drawings, the same reference numerals are employed for designating the same elements throughout the several figures and the present description.

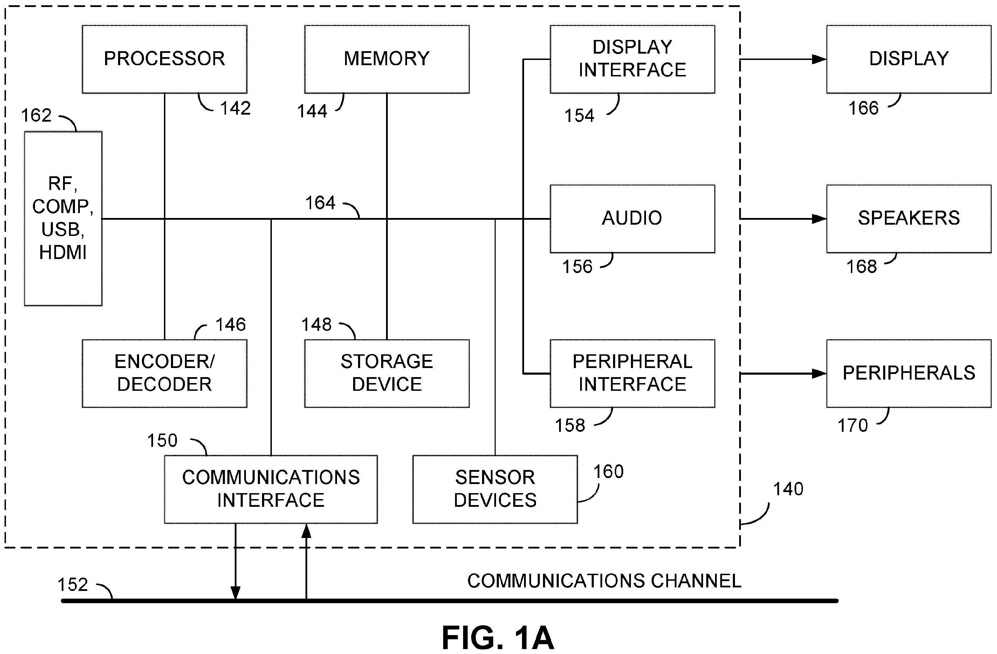

FIG. 1A is a system diagram illustrating an example set of interfaces for a system according to some embodiments. An extended reality display device, together with its control electronics, may be implemented using a system such as the system of FIG. 1A. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

**Scene Description Framework for XR**

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, gITF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

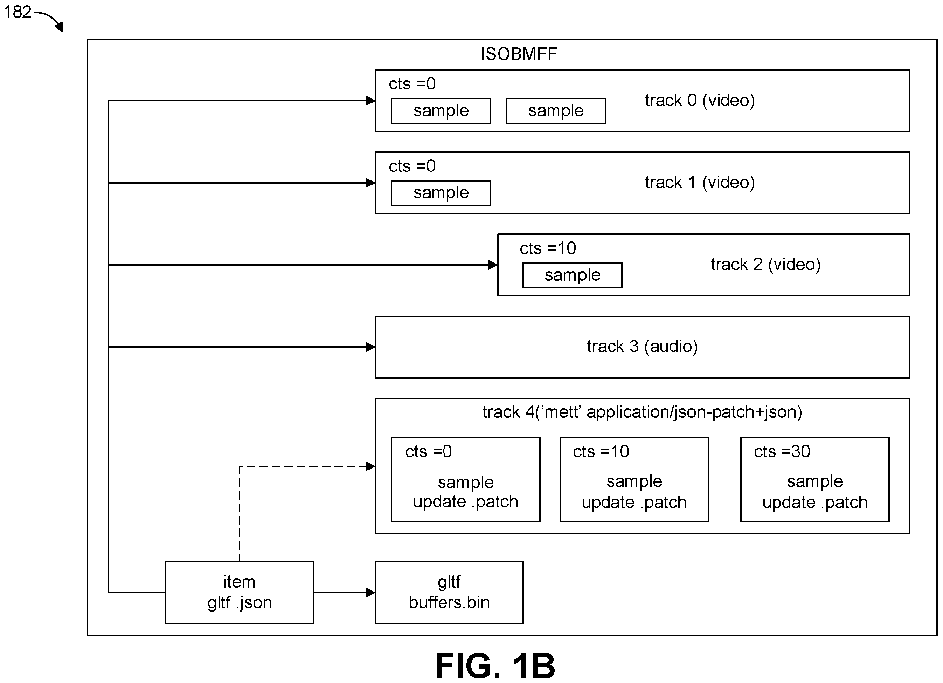

FIG. 1B is a system diagram illustrating an example set of interfaces for a scene description (stored as an item in gITF.json), three video tracks, an audio track, and a JSON patch update track in an ISOBMFF file 182 according to some embodiments.

## Runtime Interactivity

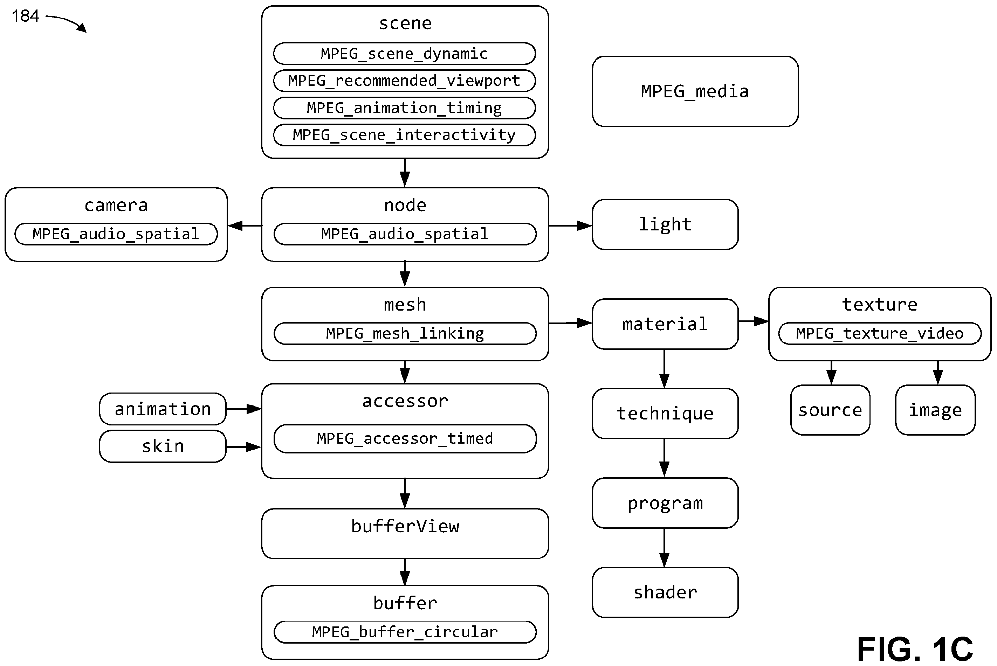

FIG. 1C is a system diagram illustrating an example set of interfaces for an MPEG-I node hierarchy 184 supporting elements of scene interactivity according to some embodiments.

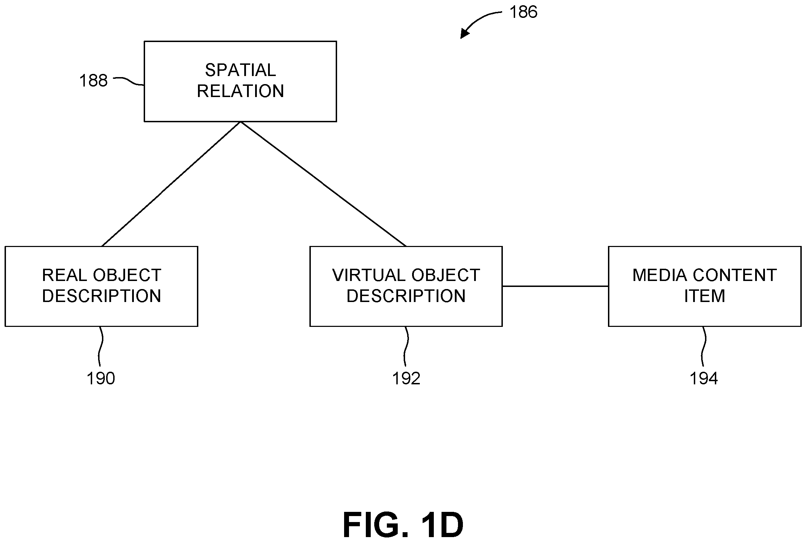

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos gITF extension mechanism, which supports additional scene description features, such as a node tree. However, the principles described herein are not limited to a particular scene description framework.

In an example embodiment, the gITF scene description is extended to support interactivity. The interactivity extension applies at the gITF scene level and is called MPEG_scene_interactivity. See the document ISO/IEC 23090-14, *CDAM 2: Support for Haptics, Augmented Reality, Avatars, Interactivity, MPEG-I Audio, and Lighting,* ISO/IEC JTC 1/SC 29/WG 03 N00797 ("*MPEG Extension*").

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application discusses, for some embodiments, eye modeling for digital human in computer graphics and describes a way to represent and process eyes when modeling 3D characters. This application describes, for some embodiments, a first semantic data-driven eye region model that spans all the possible eye poses, allowing to recreate precise eyelid shapes (from wide open to closed), gaze direction and skin deformations.

Digitalizing real humans with a very high level of faithfulness and realism has gained of interest these last years for a large range of applications such as virtual and augmented reality, visual effects, gaming (e.g., the MetaHuman technology from Epic Unreal), social network, telepresence, among other applications. The complexity of the human appearance, both static and dynamic, has forced many research teams across the academic and industrial world to develop dedicated acquisition, modeling, and simulation systems. The aim of the latter is to capture, model, and/or simulate as accurately as possible the incredible spectrum of morphologies and movements. Excluding full body research, several recent works have focused on very specific elements of the human head, such as the face, hair, neck, tongue, eye, eyelids, teeth, lips, ear, or jaws.

The eyes are perceptually one of the most important features of the human face, allowing the conveying of emotions and mental state. The eye region displays a wide variety of possible deformations, which play a role in the context of creation of a faithful digital double (or representation). As understood and as of the date of writing of this application, there is no eye model embedding semantic features, such as gaze, eyelid aperture, and identity of a subject (or person).

A problem to be solved by this application is creation of a better and faster modeling of the eye region. For some embodiments, a strength of the model discussed herein is providing a way to separate the dimensions of gaze, eyelid aperture, and identity. Even when using a robust and efficient 3D morphable model for fitting a mesh based on a video, an image, or another mesh, the user obtains a latent code, which encodes implicit information but not any explicit (semantic) information.

An eye region model formalized as a multilinear model that preserves the semantic of expression modes with a reduced number of parameters is discussed herein. As understood, standard facial multilinear models are usually obtained via decomposing a tensor with a High Order Singular Value Decomposition (HOSVD) or a Higher Order Orthogonal Iteration of Tensors (HOOI) algorithm. Given a tensor $D$, such a decomposition may be written as shown in Eq. 1:

$$D = C \times_1 U_{id} \times_2 U_a \times_3 U_y \times_4 U_x \qquad (1)$$

where C is the core tensor whose variance is sorted from last to first elements for each mode (analogous to a Singular Value Decomposition (SVD) matrix). $U_{id}$ (identity), $U_a$ (aperture), $U_y$ (vertical level), and $U_x$ (horizontal level) are orthonormal matrices called factors. The columns of $U_{id}$, $U_a$, $U_y$, and $U_x$ contain left singular vectors of the 1st mode (identity) space, the 2nd mode (aperture) space, the 3rd mode (vertical level) space, and the 4th mode (horizontal level) space, respectively. The symbols $\times_n$ denote the mode-n product, which linearly transform the n-th mode space of a tensor (left hand side) with a matrix (right hand side).

If this manipulation allows low-rank approximations to be made, the manipulation also breaks the interpretability of the vectors in the affected dimensions. Since a goal of this application is to keep the semantics of the expression modes, the decomposition is performed only on the first mode (identity). This is equivalent to a SVD on an unfolded tensor $D'$ of dimensions $(x \times (4 \times 3 \times 3n_y))$, where $x$ is the number of subjects in the model. Tests were run with $x = 57$ persons. Similarly to Principal Component Analysis (PCA), a matrix $C'$ may be obtained which is composed of the eigenvectors of $D'$ sorted by corresponding eigenvalues.

For dimensionality reduction, only the first $1 \leq m \leq 57$ eigenvectors are kept. Then, this tensor is unfolded back to dimension ($m \times 4 \times 3 \times 3n_v$) to use this unfolded tensor as the core tensor $C$ of a multi-linear model. At this point, the multi-linear model is defined as shown in Eq. 2:

$$M_{multilin} = \{M, \sigma, C\} \tag{2}$$

where $M \in \mathbb{R}^{4x3x3x3n_v}$ is the identity mean tensor subtracted from $D$ before the SVD process, and $\sigma \in \mathbb{R}^m$ is the standard deviation of C computed on each axis except the first one.

The multi-linear model may be used to generate novel combinations of identities and expressions as shown in Eq. 3:

$$M_{multilin}(\alpha, w_a, w_y, w_x) = (M + C \times_1 (diag(\sigma) \cdot \alpha)) \times_2 w_a \times_3 w_y \times_4 w_x \tag{3}$$

where $\alpha \in \mathbb{R}^m$ is the identity code, and $w_a \in \mathbb{R}^4$, $w_y \in \mathbb{R}^3$, and $w_x \in \mathbb{R}^3$ are the expression codes. This formulation is not convenient for manipulation because the codes are not scalars but vectors. Moreover, incompatible eye poses, such as "eye closed" and "eye wide open", may be mixed, thereby leading to uncanny results.

To reduce the number of effective parameters, scalar values of expressions may be mapped to plausible expression codes. Some embodiments may use a rig to do this mapping. Such a rig may have 3 controllers, with one controller for each expression mode. A controller $f_k$ maps a scalar $u \in [0, 1]$ to a vector of expression weights u $\in [0, 1]^k$ as shown in Eqs. 4 and 5:

$$f_k : [0, 1] \rightarrow [0, 1]^k \tag{4}$$

$$u \mapsto \begin{cases} u_i = \lceil(k-1)u\rceil - (k-1)u & if \ i = \lfloor(k-1)u\rfloor \\ u_i = (k-1)u - \lfloor(k-1)u\rfloor & if \ i = \lceil(k-1)u\rceil \\ u_i = 0 & else \end{cases} \tag{5}$$

An eye region model may be expressed as shown in Eq. 6:

$$M_{multilin}(\alpha, a, y, x) = (M + C \times_1 (diag(\sigma) \cdot \alpha)) \times_2 f_4(a) \times_3 f_3(y) \times_4 f_3(x) \tag{6}$$

where $a, y, x \in [0, 1]$ are the expression parameters fed to the controllers. This formulation extends the person-specific eye region rig proposed by the reference Kerbiriou, Glenn, et al., *Detailed Eye Region Capture and Animation.* COMPUTER GRAPHICS FORUM (2022), *available at*: doi<dot>org/10<dot>1111/cgf<dot>14642 by introducing an identity dimension while preserving the semantic of the expression.

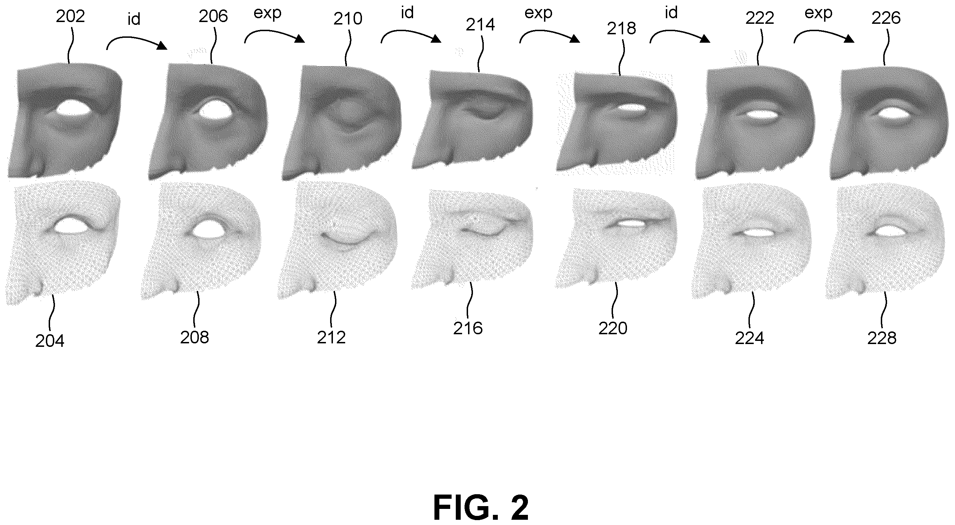

FIG. 2 is a series of schematic illustrations showing example morphologies with an eye region model according to some embodiments. FIG. 2 shows two sets of models of an eye region. The first set of models 202, 206, 210, 214, 218, 222, 226 go through a first set of morphs/transformations between each state. A second set of models 204, 208, 212, 216, 220, 224, 228 through a second set of morphs/transformations between each state. Furthermore, FIG. 2 shows a semantic data-driven model of the eye region, which enables efficient modeling for any morphology used with eyelids and gaze direction. Interpolations are made by the model (or rig controller for some embodiments) corresponding to the morph/-transformation settings.

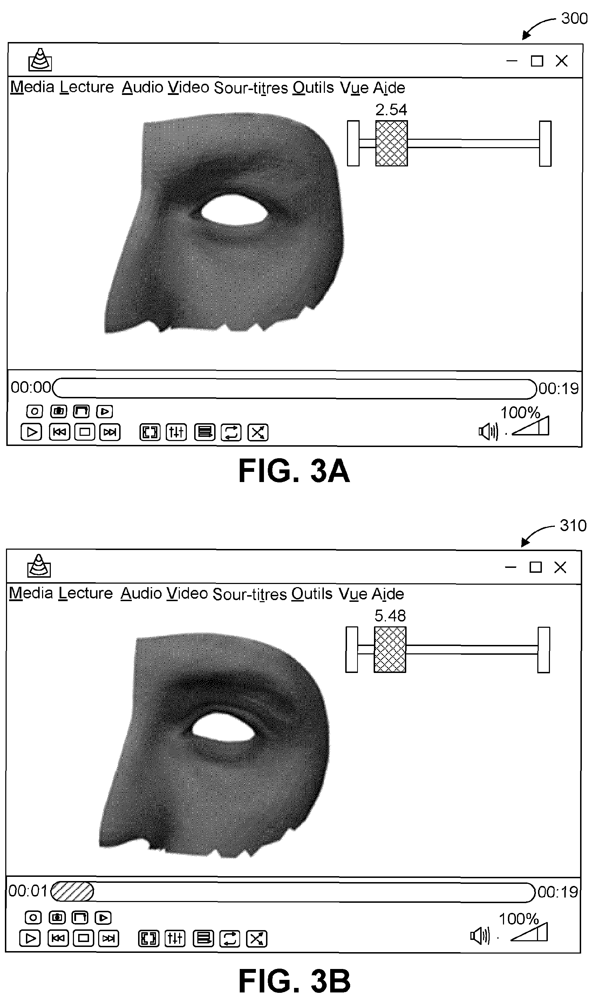

FIGs. 3A-3H are schematic illustrations showing examples of identity interpolation according to some embodiments. FIGs. 3A to 3H show a series of eye regions 300, 310, 320, 330, 340, 350, 360, 370 that use an example semantic model in which the identity dimension is adjusted across the set of figures. Interpolations are made by the model (or rig controller for some embodiments) to match the setting of the corresponding identity ("id") controller.

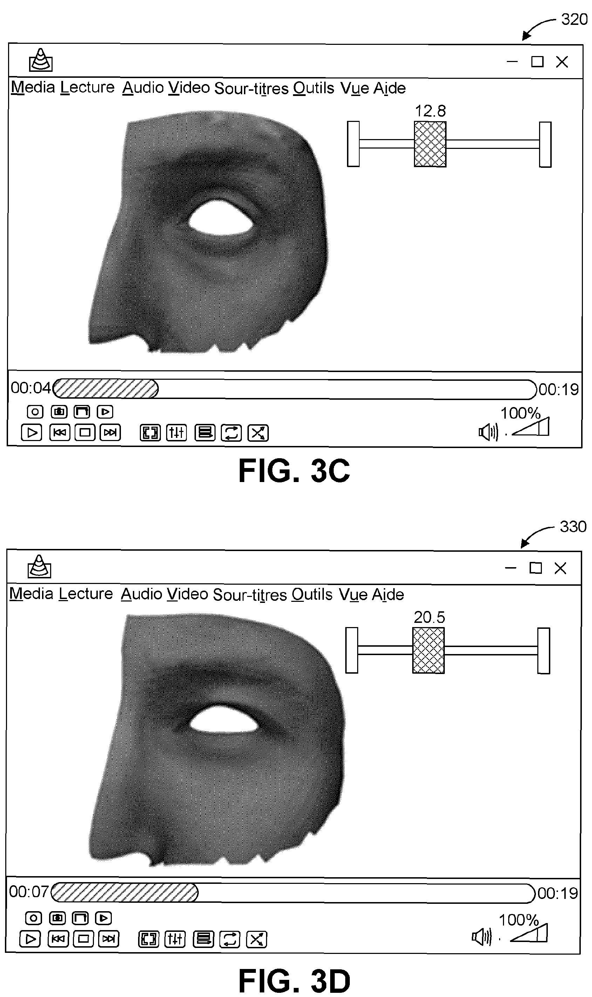

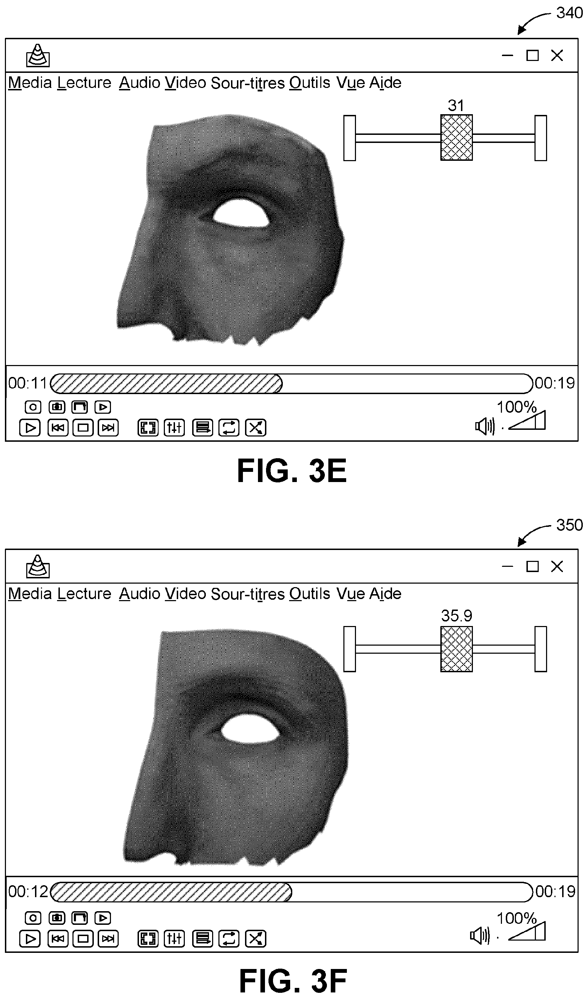

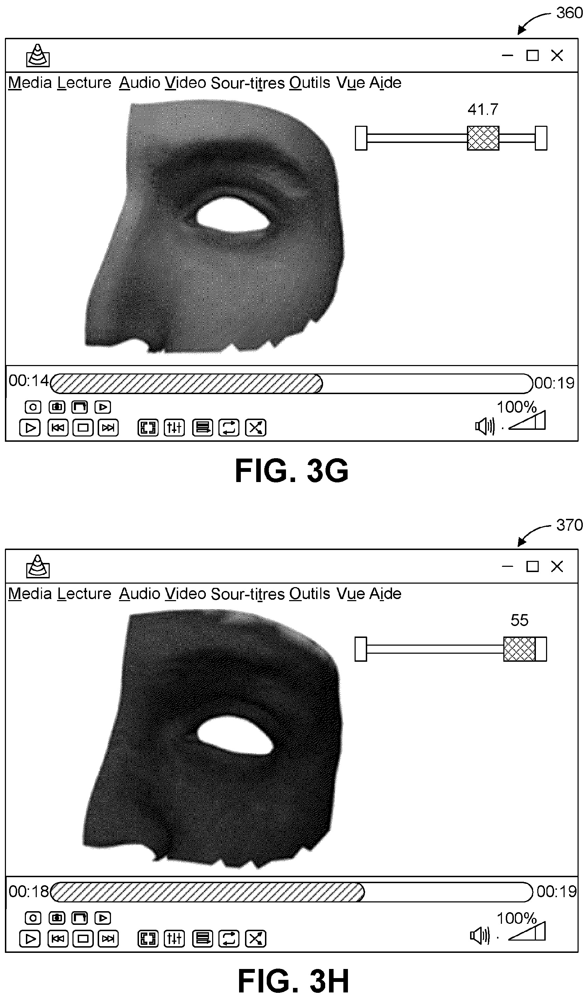

FIG. 3A shows an example eye region 300 interpolated for an example identity controller setting of 2.54. FIG. 3B shows an example eye region 310 interpolated for an example identity controller setting of 5.48. FIG. 3C shows an example eye region 320 interpolated for an example identity controller setting of 12.4. FIG. 3D shows an example eye region 330 interpolated for an example identity controller setting of 20.5. FIG. 3E shows an example eye region 340 interpolated for an example identity controller setting of 31. FIG. 3F shows an example eye region 350 interpolated for an example identity controller setting of 35.9. FIG. 3G shows an example eye region 360 interpolated for an example identity controller setting of 41.7. FIG. 3H shows an example eye region 370 interpolated for an example identity controller setting of 55.

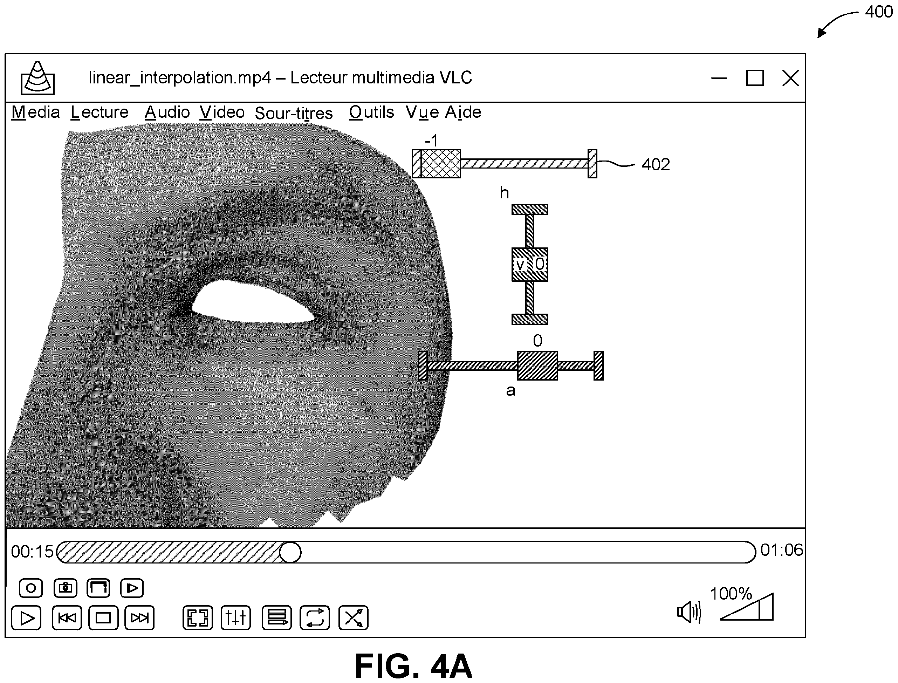

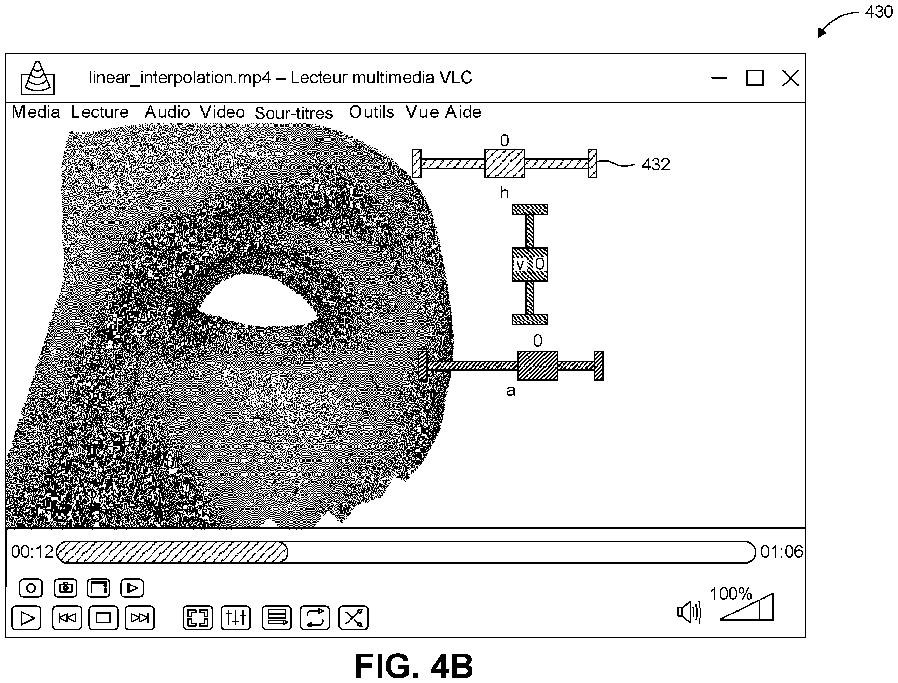

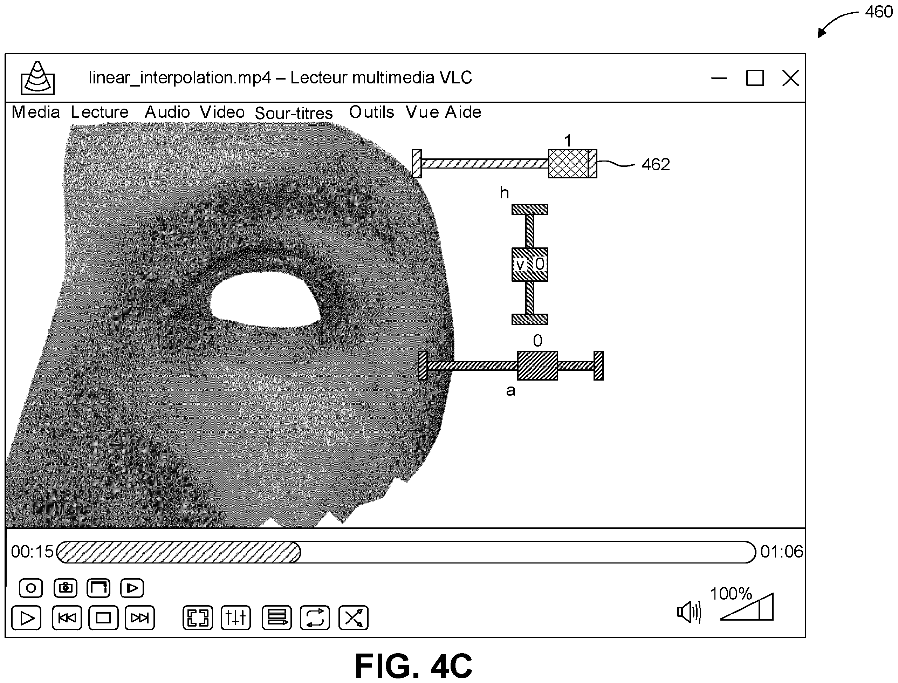

FIGs. 4A-4C are schematic illustrations showing examples of horizontal gaze angle changes according to some embodiments. FIGs. 4A-4C show a series of eye regions 400, 430, 460 in which the horizontal gaze angle controller "h" 402, 432, 462 is adjusted. FIG. 4A shows the horizontal gaze angle controller "h" 402 with an example setting ("-1") for looking left. FIG. 4B shows the horizontal gaze angle controller "h" 432 with an example setting ("0") for looking in the middle. FIG. 4C shows the horizontal gaze angle controller "h" 462 with an example setting ("1") for looking right. Interpolations are made by the model (or rig controller for some embodiments) to match the setting of the corresponding horizontal gaze angle controller "h" 402, 432, 462.

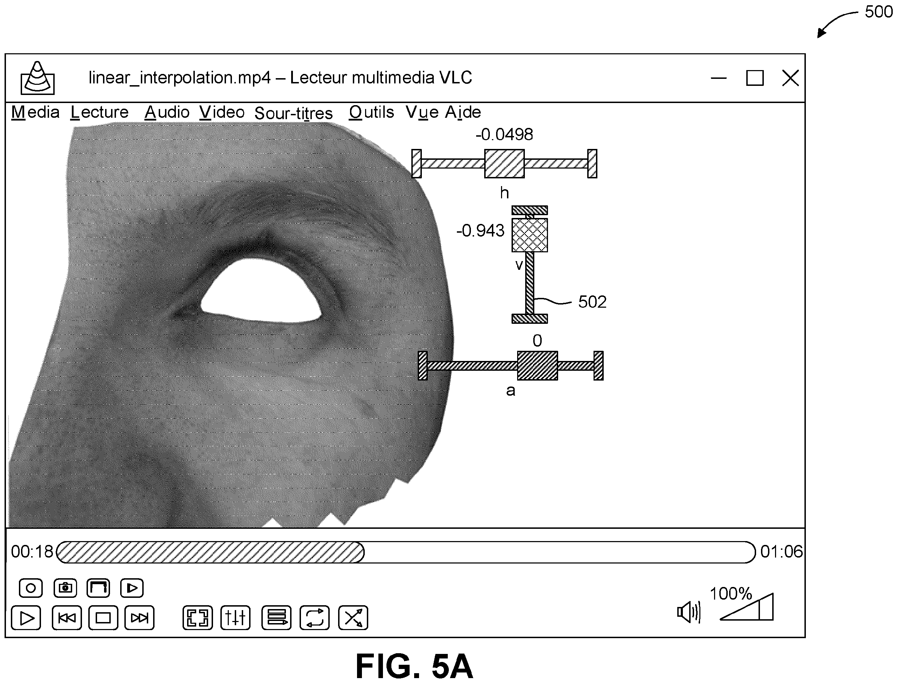

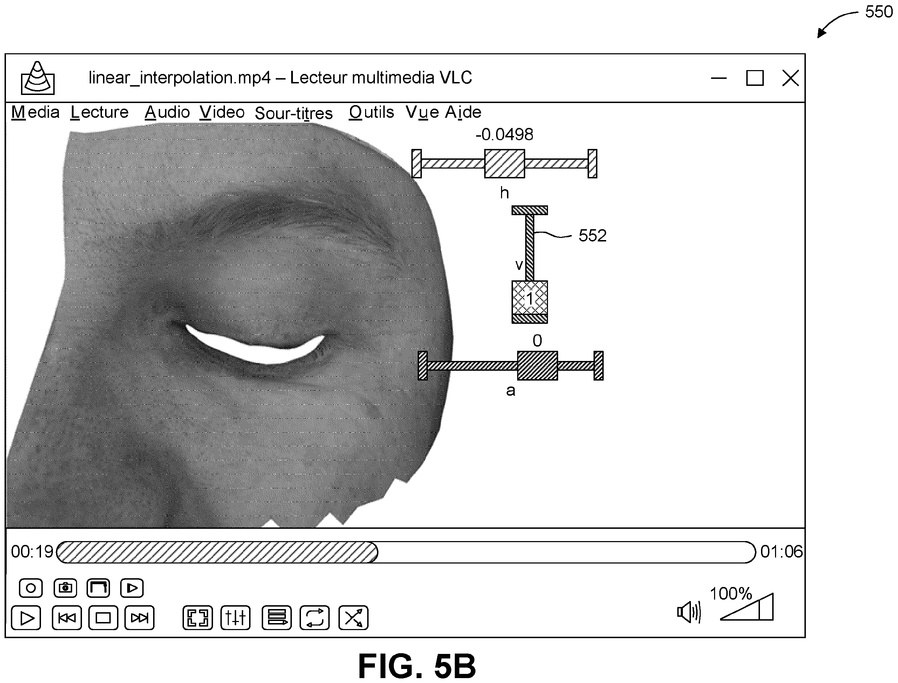

FIGs. 5A-5B are schematic illustrations showing examples of vertical gaze angle changes according to some embodiments. FIGs. 5A and 5B show a pair of eye regions 500, 550 in which the vertical gaze angle controller "v" 502, 552 is adjusted. FIG. 5A shows the vertical gaze angle controller "v" 502 with an example setting ("-0.943") for looking up. FIG. 5B shows the vertical gaze angle controller "v" 552 with an example setting ("1") for looking down. Interpolations are made by the model (or rig controller for some embodiments) to match the setting of the corresponding vertical gaze angle controller "v" 502, 552.

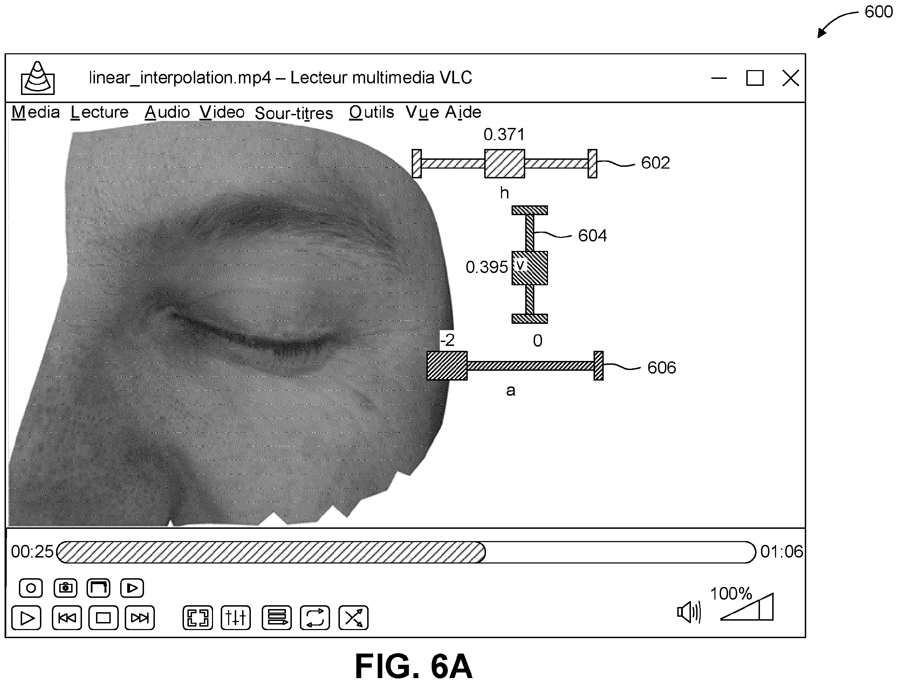

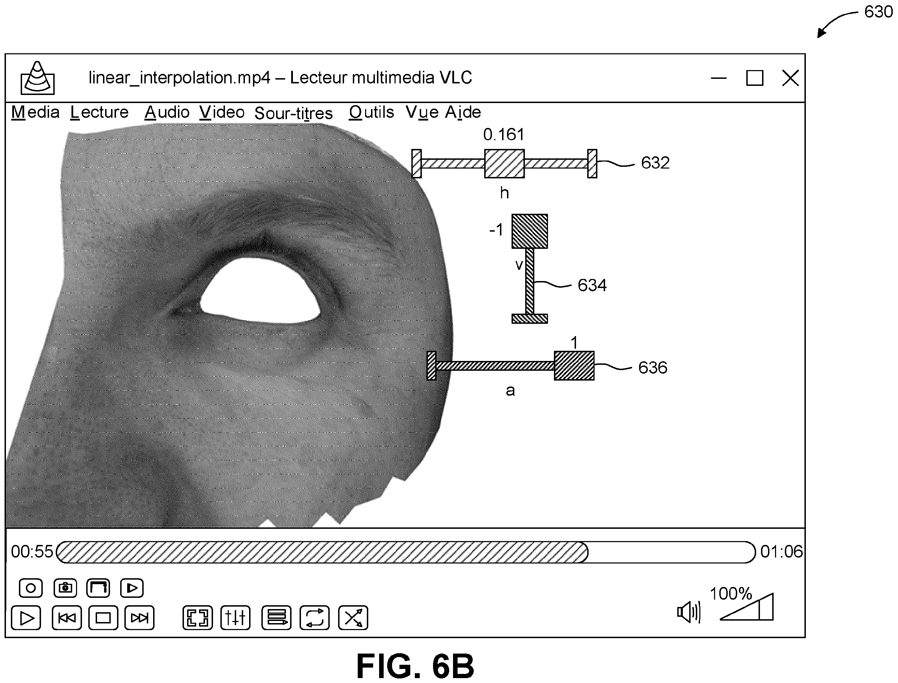

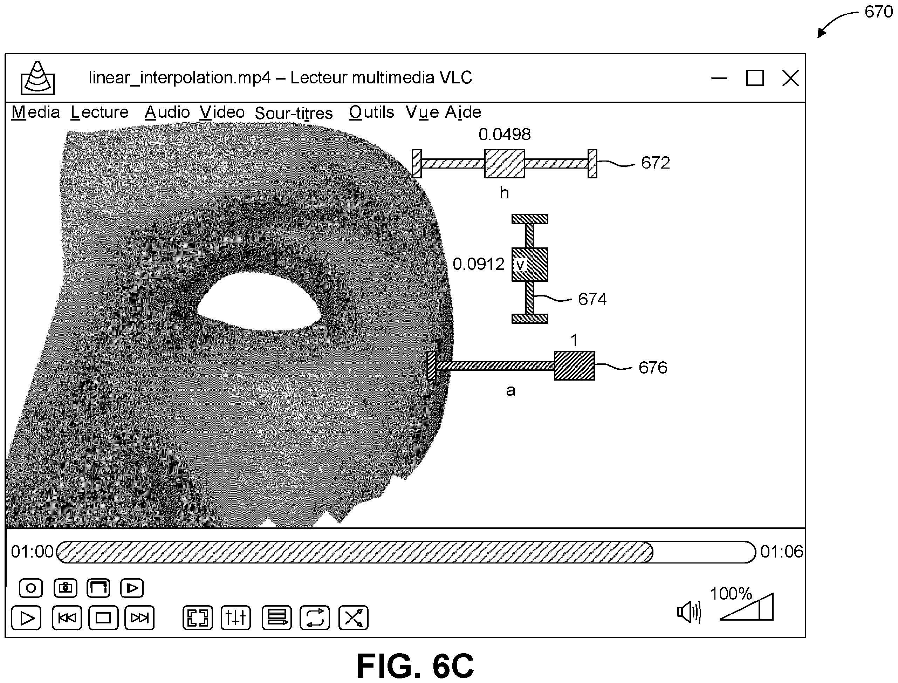

FIGs. 6A-6C are schematic illustrations showing examples of eyelid aperture changes according to some embodiments. FIGs. 6A-6C show a series of eye regions 600, 630, 670 in which multiple controllers are adjusted to adjust the eyelid aperture. Interpolations are made by the model (or rig controller for some embodiments) to match the settings of the controllers in each of FIGs. 6A, 6B, and 6C.

FIG. 6A shows the horizontal gaze angle controller "h" 602 with an example setting of 0.371, the vertical gaze angle controller "v" 604 with an example setting of 0.395, and the aperture controller "a" 606 with an example setting of -2. FIG. 6A shows an eye region 600 corresponding to the eyelid closed with a neutral gaze.

FIG. 6B shows the horizontal gaze angle controller "h" 632 with an example setting of 0.161, the vertical gaze angle controller "v" 634 with an example setting of -1, and the aperture controller "a" 636 with an example setting of 1. FIG. 6B shows an eye region 630 corresponding to the eyelid wide open and a gaze of looking up.

FIG. 6C shows the horizontal gaze angle controller "h" 672 with an example setting of 0.0498, the vertical gaze angle controller "v" 674 with an example setting of 0.0912, and the aperture controller "a" 676 with an example setting of 1. FIG. 6C shows an eye region 670 corresponding to the eyelid open with a neutral gaze.

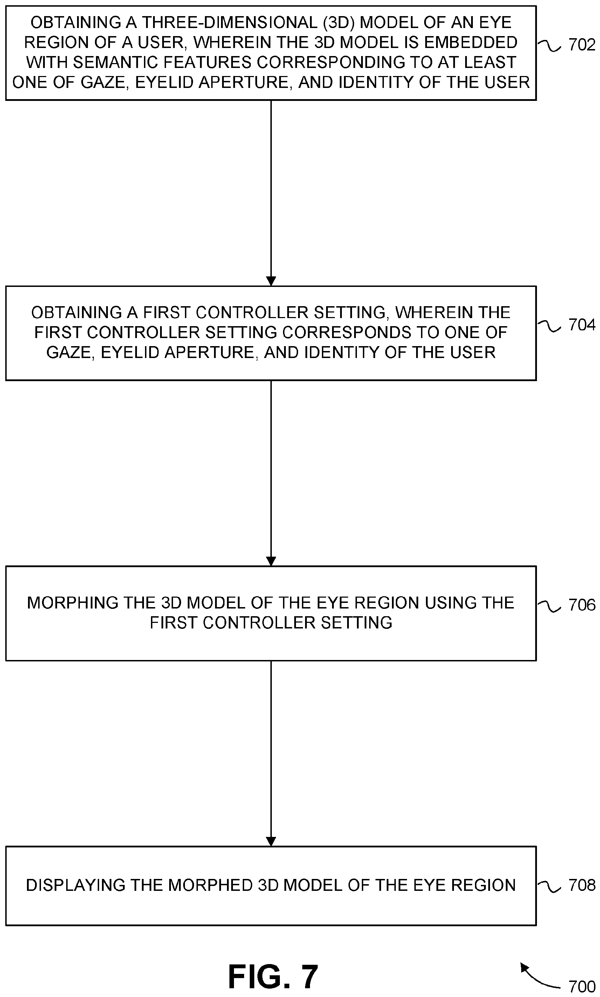

FIG. 7 is a flowchart illustrating an example process for using a 3D eye region model according to some embodiments. For some embodiments, an example process 700 may include obtaining 702 a three-dimensional (3D) model of an eye region of a user, wherein the 3D model is embedded with semantic features corresponding to at least one of gaze, eyelid aperture, and identity of the user. For some embodiments, the example process 700 may further include obtaining 704 a first controller setting, wherein the first controller setting corresponds to one of gaze, eyelid aperture, and identity of the user. For some embodiments, the example process 700 may further include morphing 706 the 3D model of the eye region using the first controller setting. For some embodiments, the example process 700 may further include displaying 708 the morphed 3D model of the eye region.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a three-dimensional (3D) model of an eye region of a user, wherein the 3D model is embedded with semantic features corresponding to at least one of gaze, eyelid aperture, and identity of the user; obtaining a first controller setting, wherein the first controller setting corresponds to one of gaze, eyelid aperture, and identity of the user; morphing the 3D model of the eye region using the first controller setting; and displaying the morphed 3D model of the eye region.

Some embodiments of the example method may further include: obtaining a second controller setting, wherein the second controller setting corresponds to one of gaze, eyelid aperture, and identity of the user, and wherein the first controller setting is different than the second controller setting; re-morphing the 3D model of the eye region using the second controller setting; and displaying the re-morphed 3D model of the eye region.

For some embodiments of the example method, the first controller setting corresponds to a first expression code, and the second controller setting corresponds to a second expression code.

Some embodiments of the example method may further include passing the first and second controller settings through a validity check process to ensure that the first expression code is compatible with the second expression code.

Some embodiments of the example method may further include: mapping the first expression code to a first plausible expression code; and mapping the second expression code to a second plausible expression code, wherein mapping the first and second expression codes respectively to first and second plausible expression codes is performed such that the first plausible expression code is compatible with the second plausible expression code.

For some embodiments of the example method, the 3D model of the eye region uses a combination of identity codes and expression codes.

For some embodiments of the example method, morphing the 3D model of the eye region comprises manipulating the 3D model using an identity code associated with the first controller setting.

For some embodiments of the example method, morphing the 3D model of the eye region comprises manipulating the 3D model using an expression code associated with the first controller setting.

For some embodiments of the example method, the expression code is associated with an aperture parameter, a vertical level parameter, or a horizontal level parameter of the eye region.

For some embodiments of the example method, the 3D model of the eye region is associated with an avatar.

For some embodiments of the example method, morphing the 3D model of the eye region comprises adjusting in a horizontal direction a gaze of an eye associated with the 3D model based on the first controller setting.

For some embodiments of the example method, morphing the 3D model of the eye region comprises adjusting in a vertical direction a gaze of an eye associated with the 3D model based on the first controller setting.

For some embodiments of the example method, morphing the 3D model of the eye region comprises adjusting an aperture size of an eye associated with the 3D model based on the first controller setting.

For some embodiments of the example method, morphing the 3D model of the eye region comprises adjusting a skin color of skin around an eye associated with the 3D model based on the first controller setting.

An example apparatus in accordance with some embodiments may include: a processor; and a memory storing instructions operative, when executed by the processor, to cause the apparatus to perform any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment.

Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method comprising:

   obtaining a three-dimensional (3D) model of an eye region of a user,
   wherein the 3D model is embedded with semantic features corresponding to at least one of gaze, eyelid aperture, and identity of the user;
   obtaining a first controller setting,
   wherein the first controller setting corresponds to one of gaze, eyelid aperture, and identity of the user;
   morphing the 3D model of the eye region using the first controller setting; and
   displaying the morphed 3D model of the eye region.

2. The method of claim 1, further comprising:

   obtaining a second controller setting,

      wherein the second controller setting corresponds to one of gaze, eyelid aperture, and identity of the user, and
      wherein the first controller setting is different than the second controller setting;

   re-morphing the 3D model of the eye region using the second controller setting; and
   displaying the re-morphed 3D model of the eye region.

3. The method of claim 2,

   wherein the first controller setting corresponds to a first expression code, and
   wherein the second controller setting corresponds to a second expression code.

4. The method of any one of claims 2-3, further comprising passing the first and second controller settings through a validity check process to ensure that the first expression code is compatible with the second expression code.

5. The method of any one of claims 2-3, further comprising:

mapping the first expression code to a first plausible expression code; and

mapping the second expression code to a second plausible expression code,

wherein mapping the first and second expression codes respectively to first and second plausible expression codes is performed such that the first plausible expression code is compatible with the second plausible expression code.

6. The method of any one of claims 1-5, wherein the 3D model of the eye region uses a combination of identity codes and expression codes.

7. The method of any one of claims 1-6, wherein morphing the 3D model of the eye region comprises manipulating the 3D model using an identity code associated with the first controller setting.

8. The method of any one of claims 1-6, wherein morphing the 3D model of the eye region comprises manipulating the 3D model using an expression code associated with the first controller setting.

9. The method of claim 8, wherein the expression code is associated with an aperture parameter, a vertical level parameter, or a horizontal level parameter of the eye region.

10. The method of any one of claims 1-9, wherein the 3D model of the eye region is associated with an avatar.

11. The method of any one of claims 1-9, wherein morphing the 3D model of the eye region comprises adjusting in a horizontal direction a gaze of an eye associated with the 3D model based on the first controller setting.

12. The method of any one of claims 1-9, wherein morphing the 3D model of the eye region comprises adjusting in a vertical direction a gaze of an eye associated with the 3D model based on the first controller setting.

13. The method of any one of claims 1-9, wherein morphing the 3D model of the eye region comprises adjusting an aperture size of an eye associated with the 3D model based on the first controller setting.

14. The method of any one of claims 1-9, wherein morphing the 3D model of the eye region comprises adjusting a skin color of skin around an eye associated with the 3D model based on the first controller setting.

15. An apparatus comprising:

a processor; and

a memory storing instructions operative, when executed by the processor, to cause the apparatus to perform the method of any one of claims 1 through 14.

DISPLAY 166

SPEAKERS 168

PERIPHERALS 170

140

DISPLAY INTERFACE 154

AUDIO 156

PERIPHERAL INTERFACE 158

SENSOR DEVICES 160

MEMORY 144

164

STORAGE DEVICE 148

PROCESSOR 142

146

ENCODER/ DECODER

COMMUNICATIONS INTERFACE 150

RF, COMP, USB, HDMI 162

152

COMMUNICATIONS CHANNEL

**FIG. 1A**

182

ISOBMFF

cts =0

| sample | sample | track 0 (video) |

cts =0

| sample | | track 1 (video) |

cts =10

| sample | track 2 (video) |

track 3 (audio)

track 4('mett' application/json-patch+json)

| cts =0 | cts =10 | cts =30 |
| sample update .patch | sample update .patch | sample update .patch |

item gltf .json → gltf buffers.bin

**FIG. 1B**

FIG. 1C

186

SPATIAL RELATION

188

REAL OBJECT DESCRIPTION

190

VIRTUAL OBJECT DESCRIPTION

192

MEDIA CONTENT ITEM

194

**FIG. 1D**

**FIG. 2**

FIG. 3A

FIG. 3B

320

Media Lecture Audio Video Sour-titres Outils Vue Aide

12.8

00:04 00:19

100%

## FIG. 3C

330

Media Lecture Audio Video Sour-titres Outils Vue Aide

20.5

00:07 00:19

100%

## FIG. 3D

340

Media Lecture Audio Video Sour-titres Outils Vue Aide

31

00:11 )00:19

100%

## FIG. 3E

350

Media Lecture Audio Video Sour-titres Outils Vue Aide

35.9

00:12 )00:19

100%

## FIG. 3F

FIG. 3G

FIG. 3H

EP 4 722 861 A1

**FIG. 4A**

EP 4 722 861 A1

**FIG. 4B**

**FIG. 4C**

**FIG. 5A**

**FIG. 5B**

**FIG. 6A**

EP 4 722 861 A1

**FIG. 6B**

EP 4 722 861 A1

**FIG. 6C**

OBTAINING A THREE-DIMENSIONAL (3D) MODEL OF AN EYE REGION OF A USER, WHEREIN THE 3D MODEL IS EMBEDDED WITH SEMANTIC FEATURES CORRESPONDING TO AT LEAST ONE OF GAZE, EYELID APERTURE, AND IDENTITY OF THE USER ᴎ 702

OBTAINING A FIRST CONTROLLER SETTING, WHEREIN THE FIRST CONTROLLER SETTING CORRESPONDS TO ONE OF GAZE, EYELID APERTURE, AND IDENTITY OF THE USER ᴎ 704

MORPHING THE 3D MODEL OF THE EYE REGION USING THE FIRST CONTROLLER SETTING ᴎ 706

DISPLAYING THE MORPHED 3D MODEL OF THE EYE REGION ᴎ 708

# FIG. 7

ᴎ 700

Europäisches
Patentamt

European
Patent Office

Office européen
des brevets

# EUROPEAN SEARCH REPORT

**Application Number**

EP 24 30 6615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DEBANGA R NEOG ET AL: "Interactive gaze driven animation of the eye region", WEB3D TECHNOLOGY, ACM, 2 PENN PLAZA, SUITE 701 NEW YORK NY 10121-0701 USA, 22 July 2016 (2016-07-22), pages 51-59, XP058277320, DOI: 10.1145/2945292.2945298 ISBN: 978-1-4503-4428-9 | 1-3, 8-13,15 | INV.<br>G06F3/01<br>G06T13/40<br>G06T15/06<br>G06T19/20 |
| Y | * abstract *<br>* figures 1,4,5,7 *<br>* section 4<br>section 4.1<br>section 4.2 * | 6,7,14 | |
| X | SCHWARTZ GABRIEL GBSCHWARTZ@FB COM ET AL: "The eyes have it", ACM TRANSACTIONS ON GRAPHICS, ACM, NY, US, vol. 39, no. 4, 8 July 2020 (2020-07-08), pages 91:1-91:15, XP058682884, ISSN: 0730-0301, DOI: 10.1145/3386569.3392493 | 1-5, 8-13,15 | |
| | | | **TECHNICAL FIELDS SEARCHED (IPC)** |
| Y | * abstract *<br>* figures 1,7,10,12,13,14,15 *<br>* section "1 Introduction"<br>section 4.1, "Multi-View Gaze Estimation"<br>section 4.3, "Region Separation"<br>section 8 * | 6,7,14 | G06F<br>G06T |
| Y | ZHENGYANG WU ET AL: "MagicEyes: A Large Scale Eye Gaze Estimation Dataset for Mixed Reality", ARXIV.ORG, CORNELL UNIVERSITY LIBRARY, 201 OLIN LIBRARY CORNELL UNIVERSITY ITHACA, NY 14853, 18 March 2020 (2020-03-18), XP081624870, * abstract *<br>* table 1 * | 6 | |

-----

-----

-----

-/--

The present search report has been drawn up for all claims

| Place of search | Date of completion of the search | Examiner |
|---|---|---|
| Munich | 26 February 2025 | Fedrigo, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

**EUROPEAN SEARCH REPORT**

Application Number

EP 24 30 6615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GRUBER A ET AL: "GANtlitz: Ultra High Resolution Generative Model for Multi-Modal Face Textures", CHAPTER 1: MONTE CARLO PATH TRACING, WILEY-BLACKWELL, OXFORD, vol. 43, no. 2, 24 April 2024 (2024-04-24), page n/a, XP072639032, DOI: 10.1111/CGF.15039 * abstract * * figures 1, 6, 7, 9 , 11 * ----- | 7,14 | |
| | | | TECHNICAL FIELDS SEARCHED (IPC) |

The present search report has been drawn up for all claims

| Place of search | Date of completion of the search | Examiner |
|---|---|---|
| Munich | 26 February 2025 | Fedrigo, Enrico |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

........................................................................

& : member of the same patent family, corresponding
     document

EPO FORM 1503 03.82 (P04C01)